(19) Europäisches Patentamt
European Patent Office
Office européen des brevets

(11) **EP 1 021 329 B1**

(12) **EUROPÄISCHE PATENTSCHRIFT**

(45) Veröffentlichungstag und Bekanntmachung des Hinweises auf die Patenterteilung:
**05.06.2002 Patentblatt 2002/23**

(21) Anmeldenummer: **98954304.6**

(22) Anmeldetag: **30.09.1998**

(51) Int Cl.⁷: **B60T 13/72**, B60T 7/12, B60T 8/32

(86) Internationale Anmeldenummer:
**PCT/EP98/06220**

(87) Internationale Veröffentlichungsnummer:
**WO 99/17969 (15.04.1999 Gazette 1999/15)**

(54) **BREMSKRAFTVERSTÄRKER**

BRAKE BOOSTER

SERVOFREIN

(84) Benannte Vertragsstaaten:
**DE ES FR GB IT**

(30) Priorität: **06.10.1997 DE 19744053**

(43) Veröffentlichungstag der Anmeldung:
**26.07.2000 Patentblatt 2000/30**

(73) Patentinhaber: **LUCAS INDUSTRIES PUBLIC LIMITED COMPANY**
**Solihull B90 4LA (GB)**

(72) Erfinder:
• **LINDEN, Christoph**
**D-56179 Vallendar (DE)**

• **GODLEWSKY, Gregor**
**D-56170 Bendorf (DE)**
• **MAACK, Lorenz**
**D-70197 Stuttgart (DE)**

(74) Vertreter: **Schmidt, Steffen J., Dipl.-Ing. et al**
**Wuesthoff & Wuesthoff,**
**Patent- und Rechtsanwälte,**
**Schweigerstrasse 2**
**81541 München (DE)**

(56) Entgegenhaltungen:
**EP-A- 0 706 924      EP-A- 0 800 976**
**WO-A-93/24353        WO-A-95/03196**
**WO-A-96/06763        DE-A- 19 527 493**
**DE-A- 19 612 952**

**EP 1 021 329 B1**

**Beschreibung**

Die vorliegende Erfindung betrifft einen elektronisch steuerbaren Bremskraftverstärker. Insbesondere betrifft die vorliegende Erfindung einen elektronisch steuerbaren Bremskraftverstärker mit einer Unterdruckkammer und einer Druckkammer, die durch eine bewegliche Wand voneinander getrennt sind, einer Steuerventilanordnung, die mittels einer elektromagnetischen Betätigungseinrichtung betätigbar ist, und durch die eine Druckdifferenz zwischen der Druck- und der Unterdruckkammer einstellbar ist, wobei die Steuerventilanordnung in Abhängigkeit von einem durch die elektromagnetischen Betätigungseinrichtung fließenden Strom eine Haltestellung, in der der Strom in einem Bereich zwischen einem höheren Wert und einem niedrigeren Wert liegt, ohne daß die Steuerventilanordnung die Haltestellung verläßt, eine ersten Druckänderungsstellung, in der der Strom größer als der höhere Wert ist und eine zweiten Druckänderungsstellung, in der der Strom niedriger als der niedrige Wert ist, einnimmt.

Aus der DE 195 27 493 A1 ist eine elektromagnetische Betätigungseinrichtung bekannt, die eine mit einem Steuerstrom beaufschlagbare Magnetspule und einen der Magnetspule zugeordneten Anker aufweist, der dazu eingerichtet ist, Bewegungen auszuführen, die von einem durch die Magnetspule fließenden Steuerstrom und einer den Anker in entgegengesetzte Richtungen vorspannenden Federanordnung abhängig sind. Dabei ist eine Haltestellung als Stellgröße definiert, die der Anker bei einem Haltestrom durch die Magnetspule einnimmt. Dieser durch die Magnetspule fließende Haltestrom ist auf einen höheren Wert oder auf einen niedrigeren Wert veränderbar, ohne daß der Anker die Haltestellung verläßt.

Außerdem sind der höhere sowie der niedrigere Stromwert so bemessen, daß Störungseinflüsse auf die den Anker betätigenden Magnet- und Federkräfte den Anker nicht in eine von der Haltestellung unterschiedliche betätigte Stellung bringen.

Dazu wird der höhere Stromwert in der Weise bestimmt, daß eine mit der Position des Ankers in der Haltestellung in Beziehung stehenden Größe bestimmt wird; der Steuerstrom wird um einen vorbestimmten Stromschritt solange schrittweise erhöht und an die Magnetspule der elektromagnetischen Betätigungseinrichtung als Stellgröße ausgegeben wird, bis sich die mit der Position des Ankers in der Haltestellung in Beziehung stehende Größe um einen vorherbestimmten Wert in Richtung der zweiten betätigten Stellung ändert.

Der niedrigere Stromwert wird in der Weise bestimmt, daß eine mit der Position des Ankers in der Haltestellung in Beziehung stehende Größe bestimmt wird; der Steuerstrom wird um einen vorbestimmten Stromschritt schrittweise solange verringert und an die Magnetspule der elektromagnetischen Betätigungseinrichtung als Stellgröße ausgegeben wird, bis sich die mit der Position des Ankers in der Haltestellung in Beziehung stehende Größe um einen vorherbestimmten Wert in Richtung der ersten betätigten Stellung ändert.

Weiterhin ist aus diesem Dokument bekannt, daß die Steuerventilanordnung sicher in die Haltestellung bringbar ist, wenn für den Haltestrom der arithmetische Mittelwert der Ströme gewählt wird.

Allerdings ist das in der DE 195 27 493 A1 behandelte "Lernen der Arbeitspunkte" darauf beschränkt, daß die maßgebenden Ströme für die untere Grenze und für die obere Grenze bei jedem Fahrtantritt beim Einschalten der Zündung oder während der Fahrt in regelmäßigen Zeitabständen gelernt und abgespeichert werden.

Bei einer Ansteuerung der Steuerventilanordnung werden die auf diese Weise gelernten Ströme zur Vorgabe der ersten Stellgröße verwendet, um ein ausreichendes Regelverhalten zu erzielen.

Weiterhin wird dabei die an der beweglichen Wand des Bremskraftverstärkers wirkende Druckdifferenz, für die je nach Ansteuerwunsch unterschiedliche Werte eingestellt werden, quantitativ nicht berücksichtigt. Die an der beweglichen Wand eingestellte Druckdifferenz wirkt nämlich unmittelbar auch auf den Ventilkörper, den Ventilsitz sowie das Ventilelement, was auch zu einer Verschiebung der Ströme für die untere Grenze und für die obere Grenze führt.

Die Erfindung behandelt also die Problematik, die sich durch die Verlagerung der oberen und unteren Stromwerte ergibt, welche notwendig sind, um die Steuerventilanordnung in ihrer Haltestellung zu halten.

Die Aufgabe der vorliegenden Erfindung besteht darin, diesen Nachteil zu beheben, so daß das Regelverhalten weiter verbessert ist.

Zur Lösung schlägt die Erfindung nun vor, daß bei dem eingangs genannten elektronisch steuerbaren Bremskraftverstärker bei einem Wechsel der Steuerventilanordnung aus der Haltestellung in die erste oder die zweite Druckänderungsstellung, oder bei einem Wechsel aus der ersten oder der zweiten Druckänderungsstellung in die Haltestellung die für den Wechsel benötigte Zeitdauer ermittelt wird, die ermittelte Zeitdauer mit einer vorherbestimmten Zeitspanne verglichen wird, um festzustellen, ob der Wechsel innerhalb dieser vorherbestimmten Zeitspanne erfolgt ist, und für zukünftige Wechsel der die Haltestellung definierende höhere und/oder niedrigere Stromwert $I_{AUFBAU,NEU}$, $I_{ABBAU,NEU}$, verändert wird, falls die ermittelte Zeitdauer die vorherbestimmte Zeitspanne übersteigt.

Weitere Ausgestaltungs- oder Abwandlungsmöglichkeiten sind in den abhängigen Ansprüchen gekennzeichnet.

Weitere Eigenschaften, Vorteile, Merkmale und Variationsmöglichkeiten der Erfindung werden anhand der nachstehenden Beschreibung einer derzeit bevorzugten Ausführungsform der Erfindung unter Bezugnahme auf die Zeichnungen erläutert.

Fig. 1  zeigt schematisch eine Fahrzeugbremsanlage mit einem elektronisch steuerbaren Bremskraftverstärker.

Fig. 2  zeigt schematisch einen einfachen Regelkreis zum Betrieb eines elektronisch steuerbaren Bremskraftverstärkers.

Fig. 3  zeigt schematisch ein Diagramm zur Erläuterung der Steuerkennlinie eines elektronisch steuerbaren Bremskraftverstärkers.

Fig. 4  zeigt schematisch zwei Zeitdiagramme zur Erläuterung des erfindungsgemäßen Vorgehensweise.

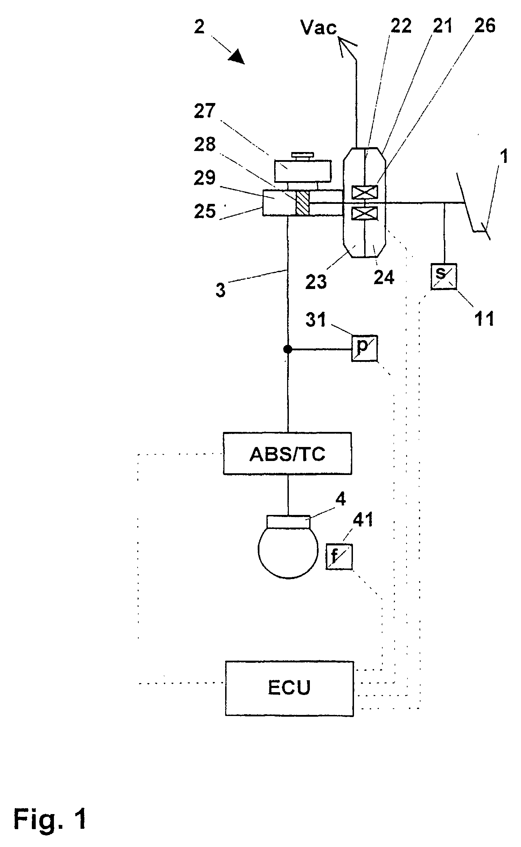

Bei der in Fig. 1 schematisch dargestellten Fahrzeugbremsanlage dient ein Bremspedal 1 dazu, über ein Betätigungselement eine Bremsdruckgebereinheit 2 zu betätigen. Die Bremsdruckgebereinheit 2 weist einen Bremszylinder 25 auf, in dem ein Kolben 28 eine Druckkammer 29 begrenzt. Die Druckkammer 29 wird von einem Reservoir 27 mit Bremsfluid versorgt. Von der Druckkammer 29 führt eine Bremsleitung 3 zu einer Radbremse 4 des Fahrzeugs.

In der Bremsleitung 3 ist eine Antiblockier- und/oder Antriebsschlupfregeleinrichtung ABS/TC zwischen der Bremsdruckgebereinheit 2 und der Radbremse 4 angeordnet. Die Antiblokkier- und/oder Antriebsschlupfregeleinrichtung ABS/TC umfaßt in bekannter Weise unter anderem Ventil- und Pumpenanordnungen, die von einer elektronischen Steuereinheit ECU angesteuert werden, um den Druck in der Radbremse 4 zu modulieren. Dies geschieht in Abhängigkeit des Drehverhaltens eines der Radbremse 4 zugeordneten Fahrzeugrades, das mittels eines Sensors 41 erfaßt und der elektronischen Steuereinheit ECU zugeführt wird.

Die Bremsdruckgebereinheit 2 weist zur Verstärkung der vom Fahrer über das Bremspedal 1 eingeleiteten Betätigungskraft einen Bremskraftverstärker 21 auf. Eine bewegliche Wand 22 unterteilt den Bremskraftverstärker 21 in eine Unterdruckkammer 23 und eine Druckkammer 24. Zur Erzeugung des Unterdrucks ist die Unterdruckkammer an eine nicht näher dargestellte Unterdruckquelle Vac angeschlossen. Bei einem mit einem Ottomotor ausgerüsteten Fahrzeug steht hierfür das im Ansaugrohr prinzipbedingt erzeugte Vakuum zur Verfügung. Dagegen ist bei einem mit einem Diesel- oder Elektromotor angetriebenen Fahrzeug eine zusätzliche Vakuumpumpe als Unterdruckquelle Vac notwendig. Bei einer Betätigung des Bremspedals 1 funktioniert der Bremskraftverstärker in bekannter Weise dadurch, daß die Druckkammer 24 mit Atmosphärendruck beaufschlagt wird, so daß an der beweglichen Wand 22 eine Druckdifferenz wirkt, die die am Bremspedal 1 eingeleitete Betätigungskraft untertützt. Im unbetätigten Zustand sind die Unterdruckkammer 23 und die Druckkammer 24 miteinander verbunden und somit druckausgeglichen, so daß an der beweglichen Wand 22 keine Druckdifferenz wirksam ist.

Der Bremskraftverstärker 21 ist über eine Elektromagnetanordnung 26 auch elektronisch steuerbar. Die elektronische Steuerbarkeit des Bremskraftverstärkers 21 ermöglicht es Bremsvorgänge auch automatisch, also unabhängig von einer Betätigung des Bremspedals 1 auszuführen. Dies kann zur Ausführung beispielsweise einer Antriebsschlupfregelung, einer Fahrdynamikregelung oder einer Abstandsregelung dienen. Eine Sensoreinrichtung 11 ist vorgesehen, um mit der Betätigung des Bremspedals 1 in Beziehung stehende Größen, wie beispielsweise den Pedalweg, die Pedalkraft oder die Pedalbetätigungsgeschwindigkeit, für die Auswertung in der elektronischen Steuereinheit ECU zu erfassen, um auch Bremsungen in Notsituationen, wobei zum Beispiel die Überschreitung einer bestimmten Pedalbetätigungsgeschwindigkeit als Kriterium dient, auszuführen.

Dazu betätigt die Elektromagnetanordnung 26 ein hier nicht näher dargestelltes Steuerventil, um den Bremskraftverstärker 21 in unterschiedliche Steuerstellungen (I., II., III.) zu bringen:

- in eine erste sogenannte "Aufbaustellung" (I.), in der die Verbindung der Unterdruckkammer 23 mit der Druckkammer 24 gesperrt und die Verbindung der Druckkammer 24 zur Atmosphäre geöffnet ist, so daß an der beweglichen Wand 22 eine Druckdifferenz aufgebaut bzw. erhöht wird,
- oder in eine zweite sogenannte "Haltestellung" (II.), in der die Verbindung der Unterdruckkammer 23 mit der Druckkkammer 24 gesperrt und die Verbindung der Druckkammer 24 zur Atmosphäre gesperrt ist, so daß eine an der beweglichen Wand 22 wirkende Druckdifferenz aufrechterhalten wird,
- oder in eine sogenannte "Abbaustellung" (III.), in der die Verbindung der Unterdruckkammer 23 mit der Druckkammer 24 geöffnet und die Verbindung der Druckkammer 24 zur Atmosphäre gesperrt ist, so daß über einen Druckausgleichsvorgang eine an der beweglichen Wand 22 wirkende Druckdifferenz abgebaut wird.

Um das Steuerventil zwecks Modulation der Druckdifferenz an der beweglichen Wand 22 in die unterschiedlichen Steuerstellungen (I., II., III.) zu bringen, bestromt die elektronische Steuereinheit ECU die Elektromagnetanordnung 26 mit einem Steuerstrom $I_{SOLL}$, wobei die Variation des Steuerstroms $I_{SOLL}$ beispielsweise durch Pulsweitenmodulation erfolgt. Dabei wird auf den Anker der Elektromagnetanordnung 26 eine Magnetkraft ausgeübt, die eine Positionierung des Ankers bewirkt, entsprechend der sich dann die Steuerstellungen (I., II., III.) ergeben.

Der in der Druckkammer 29 des Bremszylinders 25 erzeugte und in die Bremsleitung 3 eingeleitete Bremsdruck $p_{IST}$ wird mittels eines Sensors 31 erfaßt und an die elektronische Steuereinheit ECU weitergeleitet, um den Bremsdruck pIST in Abhängigkeit von einem gewünschten Druckwert und/oder Druckverlauf $p_{SOLL}$ durch Verstellen des die Elektromagnetanordnung 26 bestromenden Steuerstromes $I_{SOLL}$ zu regeln.

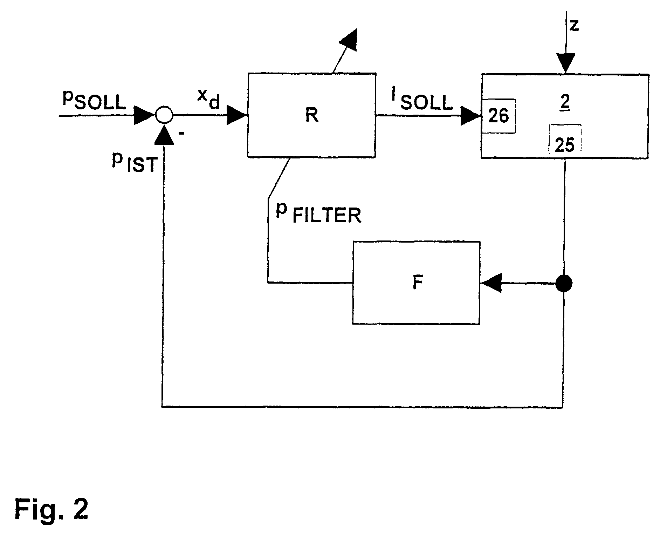

Der Betrieb des elektronisch steuerbaren Bremskraftverstärkers 21 in einem geschlossenen Regelkreis ist in Fig. 2 dargestellt. Dabei wird eine von der Regelstrecke, der Bremsdruckgebereinheit 2, ausgehende Regelgröße, der im Bremszylinder 25 erzeugte Bremsdruck $p_{IST}$, fortlaufend erfaßt und mit einer Führungsgröße, dem gewünschten Druckwert/-verlauf $p_{SOLL}$, verglichen. Das Ergebnis dieses Vergleichs ist eine Regelabweichung xd, die einer Regeleinrichtung R zugeführt wird, wobei die Regeleinrichtung R Bestandteil der elektronischen Steuereinehit ECU sein kann. Die Stellgröße, die von der Regeleinrichtung R ausgeht, ist der die Elektromagnetanordnung 26 bestromende Steuerstrom $I_{SOLL}$. Bei den Störgrößen z handelt es sich vorwiegend um Einflüße, die beispielsweise durch Reibungsverluste, Toleranzen, Temperaturschwankungen oder Schwankungen externer Reaktionskräfte, wozu insbesondere Schwankungen des Druckkraftanteils in der Unterdruckkammer 23 des Bremskraftverstärkers 21 zu zählen sind, hervorgerufen werden.

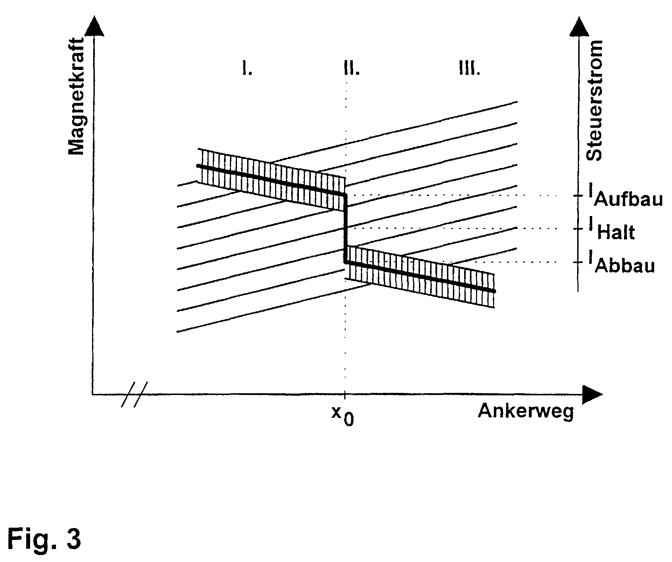

In dem Diagramm gemäß Fig. 3 ist auf der Abszisse der Weg und auf der Ordinate die auf den Anker der Elektromagnetanordnung 26 ausgeübte Magnetkraft aufgetragen, die sich in Abhängigkeit von dem Steuerstrom $I_{SOLL}$ ergibt. Hierbei handelt es sich um eine idealisierte schematische Darstellung, die sich auf einen Arbeitsbereich bezieht, der derart ausgelegt ist, daß ein proportionaler Zusammenhang zwischen Magnetkraft und Steuerstrom besteht. Weiterhin ist die Steuerkennlinie des elektronisch steuerbaren Bremskraftverstärkers 21 eingetragen. Diese Steuerkennlinie weist insgesamt drei Zweige auf. Bei dem senkrechten Zweig ist einer bestimmten Ankerposition x0 eine Strombereich $I_{ABBAU} < I_{SOLL} < I_{AUFBAU}$ zugeordnet, wobei die Position x0 genau der Haltestellung (II.) entspricht. Der sich nach links an den senkrechten Zweig anschließende geneigte Zweig gilt für einen Strom $I_{SOLL} > I_{AUFBAU}$ und steht für die Aufbaustellung (I.), während der von dem senkrechten Zweig nach rechts abgehende geneigte Zweig für einen Strom ISOLL $< I_{ABBAU}$ gilt und die Abbaustellung (III.) charakterisiert.

Bedingt durch die bereits erwähnten durch Reibung, Toleranzen, Reaktionskräfte usw. hervorgerufenen Störeinflüsse, ist die Steuerkennlinie im Bereich der geneigten Zweige mit einem Streuband behaftet, was zu einer Verschiebung der Arbeitspunkte $I_{ABBAU}$ und $I_{AUFBAU}$ führt. Es hat sich in der Praxis herausgestellt, daß bei falsch eingestellten Arbeitspunkten $I_{AUFBAU}$ bzw. $I_{ABBAU}$ eine typische Schwingung auftritt, deren Frequenz fTYP in der Größenordnung von 7 Hz liegt, und die dem den Bremsdruck repräsentierenden Signal pIST überlagert ist. Wie in Fig. 2 dargestellt, ist zur Erkennung der Schwingfrequenz ein Bandpassfilter F vorgesehen, das eine Mittenfrequenz in der Größenordnung der typischen Schwingfrequenz $f_{TYP}$ aufweist. Dem Bandpassfilter F wird eingangsseitig das Signal $p_{IST}$ zugeführt. Aufgrund der Bandpassfilterung ergibt sich ausgangsseitig ein periodisches (sinusähnliches) Signal $p_{FILTER}$, das gegenüber dem Signal $p_{IST}$ keine Gleichanteile aufweist, und somit falls vorhanden genau die typische Schwingung repräsentiert. Falls keine typische Schwingung auftritt, also die Arbeitspunkte $I_{AUFBAU}$ bzw. $I_{ABBAU}$ richtig eingestellt sind, ist das Signal $p_{FILTER}$ (nahezu) gleich Null. Das Signal $p_{FILTER}$ wird der Regeleinrichtung R zugeführt, um den Steuerstrom $I_{SOLL}$ an die richtigen Arbeitspunkte $I_{AUFBAU}$ bzw. $I_{ABBAU}$ anzupassen.

Um dem Problem, das sich durch die Verschiebung der Arbeitspunkte $I_{AUFBAU}$ bzw, $I_{ABBAU}$ ergibt, in Bezug auf die Haltestellung (II.) entgegenzuwirken, wird vorzugsweise für $I_{HALT}$ ein Strom eingestellt, der sich als arithmetischer Mittelwert der Ströme $I_{ABBAU}$ und $I_{AUFBAU}$ ergibt. Dies und insbesondere ein Verfahren zum Lernen der die Arbeitspunkte bestimmenden Ströme $I_{ABBAU}$ und $I_{AUFBAU}$ ist durch die DE 195 27 493 A1 bekannt.

Nachteiligerweise ist das in der DE 195 27 493 A1 behandelte Verfahren darauf beschränkt, die Ströme $I_{ABBAU}$ und $I_{AUFBAU}$ lediglich bei jedem Fahrtantritt beim Einschalten der Zündung oder während der Fahrt in regelmäßigen Zeitabständen, sofern kein Ansteuerwunsch für den elektronisch steuerbaren Bremskraftverstärker 21 vorliegt, zu lernen und abzuspeichern. Liegt dann ein Ansteuerwunsch für den elektronisch steuerbaren Bremskraftverstärker 21 vor, so werden die auf diese Weise gelernten Stromwerte bei jedem Übergang von der Haltestellung (II.) in die Abbaustellung (III.) sowie bei jedem Übergang von der Haltestellung (II.) in die Aufbaustellung (I.) zur Vorgabe der ersten Stellgröße verwendet, um ein ausreichendes Regelverhalten zu erzielen. Wenn durch die vorgenannten Störeinflüsse nun während der Zeitdauer, für die ein Ansteuerwunsch für den elektronisch steuerbaren Bremskraftverstärker 21 anliegt, eine Verschiebung der Arbeitspunkte $I_{ABBAU}$ und $I_{AUFBAU}$ verursacht wird, kann sich ein träges Regelverhalten jeweils beim Übergang von der Haltestellung (II.) in die Abbaustellung (III.) bzw. in die Aufbaustellung (I.) ergeben, wodurch sich das Leistungsverhalten des elektronisch steuerbaren Bremskraftverstärkers 21 insgesamt verschlechtert. Dies trifft in besonderem Maße dann zu, wenn der Ansteuerwunsch für den elektronisch steuerbaren Bremskraftverstärker 21 für eine verhältnismäßig lange Zeitdauer anliegt, was bei Durchführung einer Antriebsschlupfregelung, einer Fahrdynamikregelung oder einer Abstandsregelung durchaus der Fall sein kann.

Das erfindungsgemäße Verfahren basiert zunächst darauf, daß während einer Regelung bei jedem Zyklus, bei dem ausgehend von der Haltestellung (II.) die Aufbaustellung (I.) und/oder ausgehend von der Haltestellung (II.) die Abbaustellung (III.) eingenommen wird, die Zeitdauer vom Beginn des Zyklus bis zu dem Zeitpunkt, wann die Steuerventilanordnung des elektronisch steuerbaren Bremskraftverstärkers tatsächlich die Aufbaustellung (I.) und/oder die Abbaustellung (III.) eingenommen hat, ermittelt wird, um festzustellen, ob der Übergang von der Haltestellung (II.) in die Aufbaustellung (I.) und/oder der Übergang von der Haltestellung (II.) in die Abbaustellung (III.) innerhalb einer vorherbestimmten Zeitdauer erfolgt ist. Ist dies nicht der Fall, so erfolgt für den nächsten Zyklus oder die nächste Regelung eine Anpassung des die Haltestellung (II.) definierenden höheren und/oder niedrigeren Stromwertes $I_{AUFBAU,NEU}$, $I_{ABBAU,NEU}$, und zwar in der Weise, daß der die Haltestellung (II.) definierende höhere Stromwert $I_{AUFBAU,NEU}$ erhöht und/oder der die Haltestellung (II.) definierende niedrigere Stromwert $I_{ABBAU,NEU}$ reduziert wird.

Unter dem Begriff "Regelung" oder "Regelungsphase" ist der Zeitraum zu verstehen, für den ein Ansteuerwunsch für den elektronisch steuerbaren Bremskraftverstärker 21 vorliegt und unter dem Begriff "Zyklus" ist jeweils die Einstellung einer Aufbau-, Halte- oder Abbaustellung (I., II., III.) zwecks Modulation der Druckdifferenz an der beweglichen Wand 22 innerhalb einer "Regelung" zu verstehen.

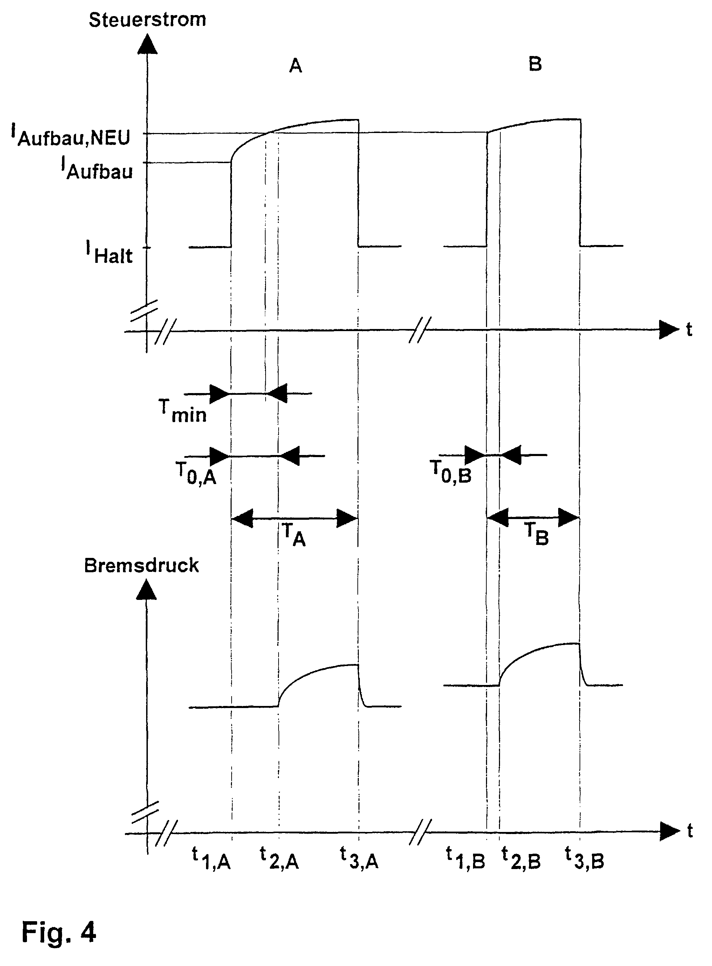

Vorteile und Ausgestaltungsmöglichkeiten werden nachfolgend anhand eines Ausführungsbeispiels erläutert. Dazu sind in Fig. 4 zwei Zeitdiagramme schematisch dargestellt, wobei in dem oberen Zeitdiagramm der die Elektromagnetanordnung bestromende Steuerstrom $I_{SOLL}$ und in dem unteren Zeitdiagramm der im Bremszylin-der 25 erzeugte Bremsdruck $p_{IST}$ jeweils über dem gleichen Zeitmaßstab t aufgetragen ist.

Das Ausführungsbeispiel zeigt zwei aufeinanderfolgende Aufbauzyklen (A, B), wobei ausgehend von der Haltestellung (II.) die Aufbaustellung (I.) eingenommen wird. Dazu wird jeweils zu Beginn des Zyklus (t1,A, t1,B) der Steuerstrom von $I_{HALT}$ auf $I_{AUFBAU}$ bzw. $I_{AUFBAU,NEU}$ sprungförmig erhöht, um $I_{AUFBAU}$ bzw. $I_{AUFBAU,NEU}$ als erste Stellgröße vorzugeben. Daraufhin wird ein Regelalgorithmus abgearbeitet, gemäß dem der Bremsdruck eingeregelt wird. Der eigentliche Regelvorgang ist in der DE 195 27 493 A1 detailliert beschrieben, so daß hier nicht näher darauf eingegangen werden muß. Beendet werden die Aufbauzyklen (A, B) jeweils indem am Ende des Zyklus (t3,A, t3,B) der Steuerstrom auf $I_{HALT}$ sprungförmig zurückgesetzt wird.

Wie aus dem vorangehenden Aufbauzyklus (A) hervorgeht, setzt nach Beginn des Zyklus (t1,A) eine Änderung des Bremsdrucks - hier im Sinne einer Erhöhung - erst zu einem verhältnismäßig späten Zeitpunkt (t2,A) ein, demzufolge die gewünschte Änderung des Bremsdrucks um die Zeitdauer T0,A verzögert einsetzt.

Bei dem nachfolgenden Aufbauzyklus (B) wird zu Beginn des Zyklus (t1,B) der Steuerstrom anstatt auf IAUFBAU auf einen höheren Wert $I_{AUFBAU,NEU}$ als erste Stellgröße sprungförmig erhöht. Dadurch setzt die gewünschte Änderung des Bremsdrucks bereits zu einem früheren Zeitpunkt (t2,B) als bei dem vorangehenden Aufbauzyklus (A) ein. Die gewünschte Änderung des Bremsdrucks ist also nur um die Zeitdauer T0,B verzögert, wobei gilt: T0,B < T0,A.

Die Anpassung des die Haltestellung definierenden höheren Stromwertes von $I_{AUFBAU}$ auf $I_{AUFBAU,NEU}$ findet bereits während dem vorangehenden Aufbauzyklus (A) statt. Dazu wird zu Beginn des Zyklus (t1,A) eine Zeitermittlung gestartet, um den Zeitpunkt (t2,A) zu ermitteln, an dem die Steuerventilanordnung tatsächlich die Aufbaustellung (I.) einnimmt. Um festzustellen, wann die Steuerventilanordnung tatsächlich die Aufbaustellung (I.) einnimmt, wird der Bremsdruck hinsichtlich einer Änderung überwacht - oder anders ausgedrückt: es wird die Verzögerungszeit T0,A bestimmt. Die so bestimmte Verzögerungszeit T0,A wird nun mit einer vorherbestimmten Zeitdauer $T_{MIN}$ verglichen. Für den Fall, daß T0,A < $T_{MIN}$ gilt, erfolgt keine Anpassung des Stromwertes $I_{AUFBAU}$ für den nachfolgenden Aufbauzyklus (B). Anderenfalls, wenn T0,A > $T_{MIN}$ gilt, erfolgt eine Anpassung des Stromwertes $I_{AUFBAU}$ für den nachfolgenden Aufbauzyklus (B) auf einen höheren Stromwert $I_{AUFBAU,NEU}$, der dann als erste Stellgröße vorgegeben wird.

Vorzugsweise wird der für den nachfolgenden Aufbauzyklus (B) vorzugebende Stromwert $I_{AUFBAU,NEU}$ auf den Stromwert gesetzt, der bei dem vorangehenden Aufbauzyklus (A) bei Ablauf der vorherbestimmten Zeitdauer $T_{MIN}$ eingestellt war.

Anhand von Fig. 4 wird deutlich, daß durch Anpassung des Stromwertes sich die Zeitdauer TB des nachfolgenden Aufbauzyklus (B) im Vergleich zu der Zeitdauer $T_A$ des vorangehenden Aufbauzyklus (A) erheblich reduziert. Dadurch verbessert sich zum einen die Regeldynamik, zum anderen ergibt sich ein weniger träges Ansprechverhalten der Steuerventilanordnung, so daß sich auch der Bremsdruck präziser steuern läßt.

Die Anpassung des die Haltestellung definierenden niedrigeren Stromwertes von $I_{ABBAU}$ auf $I_{ABBAU,NEU}$ findet in analoger Weise statt, wobei während dem vorangehenden Abbauzyklus der Stromwert $I_{ABBAU}$ auf einen niedrigeren Stromwert $I_{ABBAU,NEU}$ gesetzt wird, wenn die vorherbestimmte Zeitdauer $T_{MIN}$ überschritten wird, so daß dies hier keiner weiteren Erläuterung bedarf.

Die Weiterbehandlung der so bestimmten neuen die Haltestellung (II.) definierenden höheren bzw. niedrigeren Stromwerte $I_{AUFBAU,NEU}$, $I_{ABBAU,NEU}$ kann auf unterschiedliche Methoden erfolgen.

Erstens kann der in dem vorangehenden Zyklus ermittelte neue die Haltestellung (II.) definierende höhere Stromwert $I_{AUFBAU,NEU}$ bereits in dem nachfolgenden Zyklus, bei dem ein Übergang von der Haltestellung (II.) in die Aufbaustellung (I.) erfolgt, bzw. der in dem vorangehenden Zyklus neue die Haltestellung (II.) definierende niedrigere Stromwert $I_{ABBAU,NEU}$ bereits in dem nachfolgenden Zyklus, bei dem ein Übergang von der Haltestellung (II.) in die Abbaustellung (III.) erfolgt, als erste Stellgröße vorgegeben werden, was bereits anhand von Fig. 4 erläutert wurde. Auf diese Weise wird eine fortlaufende und somit sehr dynamische Anpassung an störeinflußbedingte Verschiebungen der Arbeitspunkte $I_{AUFBAU}$ bzw. $I_{ABBAU}$ erzielt.

Zweitens können die für den Übergang von der Haltestellung (II.) in die Aufbaustellung (I.) ermittelten Stromwerte $I_{AUFBAU,NEU}$ bzw. die für den Übergang von der Haltestellung (II.) in die Abbaustellung (III.) ermittelten Stromwerte

$I_{ABBAU,NEU}$ nach Eintritt in eine Regelung zunächst für eine vorbestimmte Lernphase beobachtet werden, um erst in Anschluß an diese Lernphase den neuen die Haltestellung (II.) definierenden höheren bzw. niedrigeren Stromwert $I_{AUFBAU,NEU}$, $I_{ABBAU,NEU}$ als erste Stellgröße vorzugeben. Dabei bestehen dann die Möglichkeiten, entweder den in der Lernphase zu Beginn der Regelung bestimmten neuen die Haltestellung (II.) definierenden höheren bzw. niedrigeren Stromwert $I_{AUFBAU,NEU}$, $I_{ABBAU,NEU}$ bis zum Ende der Regelung als erste Stellgröße unverändert beizubehalten, oder während der Regelung mehrere Lernphasen aufeinanderfolgend ablaufen zu lassen und die dabei bestimmten neuen höheren bzw. niedrigeren Stromwert $I_{AUFBAU,NEU}$, $I_{ABBAU,NEU}$ jeweils als erste Stellgröße vorzugeben. Gegenüber der erstens genann-ten Methode findet hierbei zwar eine etwas weniger dynamische Anpassung an störeinflußbedingte Verschiebungen der Arbeitspunkte $I_{AUFBAU}$ bzw. $I_{ABBAU}$ statt, allerdings werden mögliche beispielsweise durch Störungen verursachte Ungenauigkeiten bei Ermittlung der Stromwerte $I_{AUFBAU,NEU}$, $I_{ABBAU,NEU}$ kompensiert.

Drittens kann vorgesehen werden, daß dann, wenn eine Regelung nicht aktiv ist bzw. beendet wird, der während der Regelung (zuletzt) ermittelte neue höhere bzw. niedrigere Stromwert $I_{AUFBAU,NEU}$, $I_{ABBAU,NEU}$ mit dem während der/den vorangegangenen Regelung/-en (zuletzt) ermittelten neuen höheren bzw. niedrigeren Stromwert/-en gewichtet wird, um für die nächste Regelung einen höheren bzw. niedrigeren Stromwert als Initialisierungswert $I_{AUFBAU,INIT}$, $I_{ABBAU,INIT}$ zu bestimmen. Der so bestimmte Initialisierungswert wird dann im ersten Zyklus der nachfolgenden Regelung eingestellt.

Dabei kann die Gewichtung beispielsweise in Form einer Differenzengleichung über eine bestimmte Anzahl höherer bzw. niedrigerer Stromwerte $I_{AUFBAU,NEU}$, $I_{ABBAU,NEU}$ der vorangegangenen Regelungen erfolgen. Erfolgt beispielsweise die Gewichtung über 10 vorangegangene Regelungen, wobei einfach eine Mittelwertbildung durchgeführt wird, so werden die höheren bzw. niedrigeren Stromwerte $I_{AUFBAU,NEU}$, $I_{ABBAU,NEU}$ aus den vorangegangenen Regelungen jeweils mit dem Faktor 1/10 gewichtet.

$$I_{AUFBAU,INIT} = 1/10 * [\, I_{AUFBAU,NEU}(n) + I_{AUFBAU,NEU}(n-1) + ... + I_{AUFBAU,NEU}(n-9)\, ] \text{ bzw.}$$

$$I_{ABBAU,INIT} = 1/10 * [\, I_{ABBAU,NEU}(n) + I_{ABBAU,NEU}(n-1) + ... + I_{ABBAU,NEU}(n-9)\, ]$$

Es kann aber auch vorgesehen werden, die Gewichtung mit unterschiedlichen Faktoren vorzunehmen. Beispielsweise, wenn über 2 vorangegangene Regelungen gewichtet wird, in der Weise, daß der höhere bzw. niedrigere Stromwert $I_{AUFBAU,NEU}$, $I_{ABBAU,NEU}$ aus der vorletzten Regelung mit dem Faktor 9/10 und der höhere bzw. niedrigere Stromwert $I_{AUFBAU,NEU}$, $I_{ABBAU,NEU}$ aus der letzten Regelung mit dem Faktor 1/10 gewichtet wird.

$$I_{AUFBAU,INIT} = 1/10 * I_{AUFBAU,NEU}(n) + 9/10 * I_{AUFBAU,NEU}(n-1) \text{ bzw.}$$

$$I_{ABBAU,INIT} = 1/10 * I_{ABBAU,NEU}(n) + 9/10 * I_{ABBAU,NEU}(n-1)$$

Dadurch, daß der höhere bzw. niedrigere Stromwert $I_{AUFBAU,NEU}$, $I_{ABBAU,NEU}$ aus der vorletzten Regelung stärker gewichtet wird als der höhere bzw. niedrigere Stromwert $I_{AUFBAU,NEU}$, $I_{ABBAU,NEU}$ aus der letzten Regelung, besteht der Vorteil, daß ein einmaliger "Ausreißer" die Bestimmung des höheren bzw. niedrigeren Initialisierungswertes $I_{AUFBAU,INIT}$, $I_{ABBAU,INIT}$ nicht negativ beeinträchtigt, also eine gravierende sprunghafte Veränderung des höheren bzw. niedrigeren Initialisierungswertes $I_{AUFBAU,INIT}$, $I_{ABBAU,INIT}$ vermieden wird.

Als besonders vorteilhaft hat es sich in der Praxis erwiesen, die Gewichtung während der ersten 10 Regelungen mit identischen Gewichtungsfaktoren, also 1/10, vorzunehmen, und dann auf eine sich über 2 Regelungen erstreckende Gewichtung mit unterschiedlichen Gewichtungsfaktoren, also beispielsweise 9/10 und 1/10, überzugehen.

Insbesondere, damit die der Häufigkeit der Ermittlung neuer höherer bzw. niedrigerer Stromwert $I_{AUFBAU,NEU}$, $I_{ABBAU,NEU}$ ein gewisses Maß nicht übersteigt, aber auch um Ungenauigkeiten bei Ermittlung der Stromwerte $I_{AUFBAU,NEU}$, $I_{ABBAU,NEU}$ zu kompensieren, kann es sinnvoll sein daß erfindungsgemäße, nur dann auszu-führen, wenn eine oder mehrere nachstender Voraussetzungen erfüllt sind.

So sollte sich das System, also der elektronisch steuerbare Bremskraftverstärker, in einem stabilen oder zumindest fast stabilen Betriebszustand befinden, worauf sich bei Schwankungen des Bremsdruck Istsignals pIST zurückschließen läßt. Hierzu kann beispielsweise das bandpassgefilterte Signal $p_{FILTER}$ ausgewertet werden. Demnach würde das erfindungsgemäße Verfahren nur dann ausgeführt, wenn die Signalamplitude von $p_{FILTER}$ innerhalb eines vorherbestimmten zulässigen Bereiches liegt, also gilt $-p_{FILTER,MIN} < p_{FILTER} < {}^+p_{FILTER,MAX}$.

Eine weitere Voraussetzung könnte sein, wenn sich bei der Regelung längere Aufbau- bzw. Abbauzyklen als erwünscht ergeben, was sich im Prinzip, wie bereits erläutert, durch die Bestimmung der Verzögerungszeit T0,A, T0,B und die sich daran an-schließende Weiterbehandlung der so bestimmten neuen die Haltestellung (II.) definierenden höheren bzw. niedrigeren Stromwerte $I_{AUFBAU,NEU}$, $I_{ABBAU,NEU}$ mittels unterschiedlicher Gewichtungsmethoden ergibt.

Auch kann vorausgesetzt werden, daß die Regelabweichung $x_D$ größer als ein vorbestimmter Absolutwert $|x_{D,MAX}|$ sein muß, damit das erfindungsgemäße Verfahren ausgeführt wird. Im praktischen Betrieb hat sich ein Absolutwert $|x_{D,MAX}|$ in der Größenordnung von 1 bar als günstig erwiesen.

Abschließend seien folgende Vorteile, die sich beim erfindungsgemäßen Betrieb des elektronisch steuerbaren Bremskraftverstärkers ergeben, nochmals hervorgehoben.

Zum einen ergeben sich durch die optimale Bestimmung der Arbeitspunkte $I_{AUFBAU}$ bzw. $I_{ABBAU}$ kürzere Ansprechzeiten jeweils beim Übergang von der Haltestellung (II.) in die Aufbaustellung (I.) bzw. in die Abbaustellung (III.), wodurch das Leistungsverhalten des elektronisch steuerbaren Bremskraftverstärkers insgesamt in einem nicht unerheblichen Maße verbessert wird.

Zum anderen werden durch die Lernbarkeit Verschiebungen der Arbeitspunkte $I_{AUFBAU}$ bzw. $I_{ABBAU}$ selbstständig erkannt und korrigiert, so daß negative Auswirkungen von Langzeiteffekten eleminiert. Dies ist vor allem auch dann von Bedeutung, wenn ein Austausch der elektronischen Steuereinheit ECU oder des Bremskraftverstärkers 21 stattfindet, da im Anschluß daran die korrekten Arbeitspunkte $I_{AUFBAU}$ bzw. $I_{ABBAU}$ selbstständig eingestellt werden.

Weiterhin versteht es sich von selbst, daß der erfindungsgemäße Betrieb des elektronisch steuerbaren Bremskraftverstärkers besonders komfortabel hinsichtlich Geräuschentwicklung und Genauigkeit abläuft.

**Patentansprüche**

1. Elektronisch steuerbarer Bremskraftverstärker mit

   - einer Unterdruckkammer (23) und einer Druckkammer (24), die durch eine bewegliche Wand (22) voneinander getrennt sind,
   - einer Steuerventilanordnung, die mittels einer elektromagnetischen Betätigungseinrichtung (26) betätigbar ist, und durch die eine Druckdifferenz zwischen der Druck- und der Unterdruckkammer einstellbar ist, wobei
   - die Steuerventilanordnung in Abhängigkeit von einem durch die elektromagnetischen Betätigungseinrichtung (26) fließenden Strom (I)

     -- eine Haltestellung, in der der Strom in einem Bereich zwischen einem höheren Wert ($I_{AUFBAU}$) und einem niedrigeren Wert ($I_{ABBAU}$) liegt, ohne daß die Steuerventilanordnung die Haltestellung verläßt,
     -- eine ersten Druckänderungsstellung, in der der Strom größer als der höhere Wert ($I_{AUFBAU}$) ist, und
     -- eine zweiten Druckänderungsstellung, in der der Strom niedriger als der niedrige Wert ($I_{ABBAU}$) ist, einnimmt,

   **dadurch gekennzeichnet, daß**
   eine elektronische Steuereinheit vorgesehen ist welche

   - bei einem Wechsel aus der Haltestellung in die erste oder die zweite Druckänderungsstellung oder bei einem Wechsel aus der ersten oder der zweiten Druckänderungsstellung in die Haltestellung die für den Wechsel benötigte Zeitdauer ermittelt,
   - die ermittelte Zeitdauer mit einer vorherbestimmte Zeitspanne vergleicht, um festzustellen, ob der Wechsel innerhalb dieser vorherbestimmten Zeitspanne erfolgt ist, und für zukünftige Wechsel den die Haltestellung definierenden höheren und/oder niedrigeren Stromwert ($I_{AUFBAU,NEU}$, $I_{ABBAU,NEU}$,) verändert, falls die ermittelte Zeitdauer die vorherbestimmte Zeitspanne übersteigt.

2. Elektronisch steuerbarer Bremskraftverstärker nach Anspruch 1, **dadurch gekennzeichnet, daß**

   - der die Haltestellung (II., Fig. 3) definierende höhere Stromwert ($I_{AUFBAU,NEU}$) erhöht und/oder der die Haltestellung (II.) definierende niedrigere Stromwert ($I_{ABBAU,NEU}$) verringert wird.

3. Elektronisch steuerbarer Bremskraftverstärker nach Anspruch 1 oder 2, **dadurch gekennzeichnet, daß**

   - der in vorangegangenen Wechsel(n) ermittelte neue, die Haltestellung (II.) definierende höhere Stromwert

($I_{AUFBAU,NEU}$) bereits in dem nachfolgenden Wechsel, bei dem ein Übergang von der Haltestellung (II.) in die Aufbaustellung (I., Fig. 3) erfolgt, bzw. der in dem vorangehenden Zyklus neue, die Haltestellung (II.) definierende niedrigere Stromwert ($I_{ABBAU,NEU}$) bereits in dem nachfolgenden Zyklus, bei dem ein Übergang von der Haltestellung (II.) in die Abbaustellung (III., Fig. 3) erfolgt, als erste Stellgröße vorgegeben werden.

**4.** Elektronisch steuerbarer Bremskraftverstärker nach Anspruch 1 oder 2, **dadurch gekennzeichnet, daß**

- die für den Übergang von der Haltestellung (II.) in die erste Druckänderungsstellung ermittelten Stromwerte ($I_{AUFBAU,NEU}$) bzw. die für den Übergang von der Haltestellung in die zweite Druckänderungsstellung ermittelten Stromwerte ($I_{ABBAU,NEU}$) nach Eintritt in eine Regelungsphase zunächst für eine vorbestimmte Lernphase mit vorherbestimmten möglichen Änderungsprofilen verglichen werden, um erst in Anschluß an diese Lernphase den neuen die Haltestellung definierenden höheren bzw. niedrigeren Stromwert ($I_{AUFBAU,NEU}$; $I_{ABBAU,NEU}$) als erste Stellgröße vorzugeben.

**5.** Elektronisch steuerbarer Bremskraftverstärker nach Anspruch 4, **dadurch gekennzeichnet, daß**

- der in der Lernphase bestimmte neue, die Haltestellung definierende höhere bzw. niedrigere Stromwert ($I_{AUFBAU,NEU}$; $I_{ABBAU,NEU}$) bis zum Ende der jeweiligen Regelungsphase als erste Stellgröße unverändert beibehalten wird.

**6.** Elektronisch steuerbarer Bremskraftverstärker nach Anspruch 4, **dadurch gekennzeichnet, daß**

- als Initialisierungswert ($I_{AUFBAU,INIT}$; $I_{ABBAU,INIT}$) für eine nachfolgende Regelungsphase der während einer Regelungsphase ermittelte neue höhere bzw. niedrigere Stromwert ($I_{AUFBAU,NEU}$; $I_{ABBAU,NEU}$) mit dem während einem oder mehreren vorangegangenen Regelung/-en ermittelten neuen höheren bzw. niedrigeren Stromwert/-en gewichtet wird.

**7.** Elektronisch steuerbarer Bremskraftverstärker nach einem der vorhergehenden Ansprüche , **dadurch gekennzeichnet, daß**

- die erste Druckänderungsstellung eine Druckaufbaustellung und
- die zweite Druckänderungsstellung eine Druckabbaustellung ist.


**Claims**

**1.** An electronically controllable brake booster, comprising

- a vacuum chamber (23) and a pressure chamber (24) which are separated from each other by a movable wall (22),
- a control valve arrangement which is adapted to be actuated by means of an electromagnetic actuation means (26) and by means of which a pressure difference between the pressure chamber and the vacuum chamber can be adjusted, with
- the control valve arrangement, as a function of a current (I) flowing through the electromagnetic actuation means (26),

-- assuming a holding position in which the current ranges between a higher value ($I_{AUFBAU}$) and a lower value ($I_{ABBAU}$) without the control valve arrangement leaving the holding position,
-- a first pressure changing position in which the current is higher than the higher value ($I_{AUFBAU}$), and
-- a second pressure changing position in which the current is lower than the low value ($I_{ABBAU}$),

**characterised in that**
an electronic control unit is provided which

- upon a changeover from the holding position to the first or the second pressure changing position, or upon a changeover from the first or the second pressure changing position to the holding position, determines the time period required for the changeover,
- compares the determined time period with a predetermined time interval in order to determine whether the changeover has taken place within this predetermined time interval, and modifies the higher and/or lower current value ($I_{AUFBAU,NEU}$, $I_{ABBAU,NEU}$) defining the holding position for future changeovers if the determined time period exceeds the predetermined time interval.

2. The electronically controllable brake booster according to Claim 1, **characterised in that**

- the higher current value ($I_{AUFBAU,NEU}$) defining the holding position (II., Fig. 3) is increased and/or the lower current value ($I_{ABBAU,NEU}$) defining the holding position (II., Fig. 3) is decreased.

3. The electronically controllable brake booster according to Claim 1 or 2, **characterised in that**

- the new higher current value ($I_{AUFBAU,NEU}$) defining the holding position (II.) which has been determined in the previous changeover cycle(s), can be specified already in the following changeover cycle where a changeover from the holding position (II.) into the build-up position (I., Fig. 3) takes place, or the new lower current value ($I_{ABBAU,NEU}$), respectively, defining the holding position (II.), which has been determined in the previous changeover cycle, can be specified already in the following changeover cycle where a changeover from the holding position (II.) into the relief position (III., Fig. 3) takes place, as the first manipulated variable.

4. The electronically controllable brake booster according to Claim 1 or 2, **characterised in that**

- upon entering a control phase, the current values ($I_{AUFBAU,NEU}$) determined for the changeover from the holding position (II.) to the first pressure changing position, or the current values ($I_{ABBAU,NEU}$), respectively, determined for the changeover from the holding position to the second pressure changing position are first compared with predetermined possible change profiles for a predetermined learning phase in order to specify the new higher or lower, respectively, current value ($I_{AUFBAU,NEU}$; $I_{ABBAU,NEU}$) defining the holding position only subsequently to this learning phase as the first manipulated variable.

5. The electronically controllable brake booster according to Claim 4, **characterised in that**

- the new higher or lower, respectively, current value ($I_{AUFBAU,NEU}$; $I_{ABBAU,NEU}$) defining the holding position, which has been determined in the learning phase, is maintained unchanged until the end of the respective control phase.

6. The electronically controllable brake booster according to Claim 4, **characterised in that**

- the new higher or lower, respectively, current value ($I_{AUFBAU,NEU}$; $I_{ABBAU,NEU}$) which was determined during a control phase is weighted by the higher or lower, respectively, current value(s) which has/have been determined during one or several previous control(s) as the initialisation value ($I_{AUFBAU,INIT}$; $I_{ABBAU,INIT}$) for a subsequent control phase.

7. The electronically controllable brake booster according to one of the preceding claims, **characterised in that**

- the first pressure changing position is a pressure build-up position, and
- the second pressure changing position is a pressure relief position.

**Revendications**

1. Servofrein à commande électronique comprenant

- une chambre de dépression (23) et une chambre de pression (24) séparées l'une de l'autre par une paroi mobile (22) comprenant
- un dispositif de vanne de commande qui peut être actionné au moyen d'un dispositif de commande électromagnétique (26) et par lequel on peut régler une différence de pression entre les chambres de dépression et de pression, dans lequel
- le dispositif de vanne de commande prend, en fonction d'un courant (I) circulant dans le dispositif de commande électromagnétique (26),

-- une position de maintien, dans laquelle le courant se situe dans une plage comprise entre une valeur supérieure ($I_{AUFBAU}$) et une valeur inférieure ($I_{ABBAU}$), sans que le dispositif de vanne de commande quitte la position de maintien,

-- une première position de changement de pression, dans laquelle le courant est supérieur à la valeur supérieure ($I_{AUFBAU}$), et

-- une deuxième position de changement de pression, dans laquelle le courant est plus faible que la valeur inférieure ($I_{ABBAU}$),

**caractérisé en ce que**

- une unité de commande électronique est prévue qui détermine lors d'un passage de la position de maintien à la première ou à la deuxième position de changement de pression ou lors d'un passage de la première ou de la deuxième position de changement de pression dans la position de maintien, la durée nécessaire pour le passage,

- la durée déterminée est comparée à une durée fixée à l'avance pour constater si le passage a lieu pendant cette durée fixée à l'avance et modifie, pour des passages ultérieurs, la valeur du courant supérieure et / ou inférieure définissant la position de maintien ($I_{AUFBAU,NEU}$; $I_{ABBAU,NEU}$) dans le cas où la durée déterminée dépasse la durée fixée à l'avance.

2. Servofrein à commande électronique selon la revendication 1, **caractérisé en ce que**

- la valeur du courant supérieure ($I_{AUFBAU,NEU}$) définissant la position de maintien (II., Fig. 3) est augmentée et / ou la valeur du courant inférieure ($I_{ABBAU,NEU}$) définissant la position de maintien (II.) est réduite.

3. Servofrein à commande électronique selon la revendication 1 ou 2, **caractérisé en ce que**

- la nouvelle valeur du courant supérieure ($I_{AUFBAU,NEU}$) définissant la position de maintien (II.) déterminée dans des passages antérieurs est déjà donnée à l'avance comme première grandeur de commande dans le passage suivant dans lequel a lieu une transition de la position de maintien (II.) dans la position d'augmentation (I., Fig. 3), respectivement la nouvelle valeur du courant ($I_{ABBAU,NEU}$) définissant la position de maintien (II.) dans le cycle précédent est déjà donnée à l'avance comme première grandeur de commande dans le cycle suivant dans lequel a lieu une transition de la position de maintien (II.) dans la position de réduction (III., Fig. 3).

4. Servofrein à commande électronique selon la revendication 1 ou 2, **caractérisé en ce que**

- les valeurs de courant ($I_{AUFBAU,NEU}$) déterminées pour la transition de la position de maintien (II.) dans la première position de changement de pression, respectivement les valeurs de courant déterminées pour la transition de la position de maintien dans la deuxième position de changement de pression ($I_{ABBAU,NEU}$) sont d'abord, après l'entrée dans une phase de régulation, comparées, pour une phase d'apprentissage prédéterminée, à des profils de changement possibles déterminés à l'avance, pour donner à l'avance seulement suite à cette phase d'apprentissage la nouvelle valeur du courant supérieure, respectivement la nouvelle valeur du courant inférieure définissant la position de maintien ($I_{AUFBAU,NEU}$; $I_{ABBAU,NEU}$) comme première grandeur de commande.

5. Servofrein à commande électronique selon la revendication 4, **caractérisé en ce que**

- la nouvelle valeur du courant supérieure, respectivement la nouvelle valeur du courant inférieure définissant la position de maintien ($I_{AUFBAU,NEU}$; $I_{ABBAU,NEU}$) déterminée dans la phase d'apprentissage est conservée inchangée jusqu'à la fin de la phase de régulation respective comme première grandeur de commande.

6. Servofrein à commande électronique selon la revendication 4, **caractérisé en ce que**

- la nouvelle valeur du courant supérieure, respectivement la nouvelle valeur du courant inférieure ($I_{AUFBAU,NEU}$; $I_{ABBAU,NEU}$) déterminée pendant une phase de régulation est pondérée avec une ou plusieurs nouvelles valeurs du courant supérieures, respectivement nouvelles valeurs du courant inférieures déterminées pendant une ou plusieurs régulations précédentes comme valeur d'initialisation ($I_{AUFBAU,INIT}$; $I_{ABBAU,INIT}$) pour une phase de régulation suivante.

EP 1 021 329 B1

7. Servofrein à commande électronique selon l'une quelconque des revendications précédentes, **caractérisé en ce que**

- la première position de changement de pression est une position d'augmentation de pression et
- la deuxième position de changement de pression est une position de réduction de pression.

Fig. 1

**Fig. 2**

**Fig. 3**

Fig. 4